# EUROPÄISCHE PATENTSCHRIFT

(11) **EP 1 691 950 B1**
(45) Veröffentlichungstag und Bekanntmachung des Hinweises auf die Patenterteilung: **23.01.2008**
(21) Anmeldenummer: 04765530.3
(22) Anmeldetag: 23.09.2004
(51) Int. Cl.: B23K 26/24, B23K 26/26, B23K 37/04, B23K 37/047, B21C 47/26

(54) **VERFAHREN UND VORRICHTUNG ZUM STUMPFSCHWEISSEN VON BLECHEN UNTERSCHIEDLICHER DICKE MIT HILFE MINDESTENS EINER IN DER HÖHE VERSTELLBAREN UNTERHALB DER BLECHE ANGEORDNETEN SPANNROLLE**
METHOD AND DEVICE FOR BUTT WELDING METAL SHEETS OF DIFFERING THICKNESSES WITH THE AID OF AT LEAST ONE HEIGHT-ADJUSTABLE TENSION ROLLER THAT IS LOCATED BELOW THE METAL SHEETS
PROCEDE ET DISPOSITIF POUR SOUDER BOUT A BOUT DES TOLES DE DIFFERENTES EPAISSEURS AU MOYEN D'AU MOINS UN ROULEAU DE TENSION REGLABLE EN HAUTEUR MONTE SOUS LES TOLES

(30) Priorität: 11.12.2003 DE 10357891
(43) Veröffentlichungstag der Anmeldung: 23.08.2006
(73) Patentinhaber: ThyssenKrupp Drauz Nothelfer GmbH, 74076 Heilbronn (DE)
(72) Erfinder: ALBER, Gerhard, 88276 Berg (DE); RETZBACH, Martin, 88213 Ravensburg (DE)
(74) Vertreter: Dahlkamp, Heinrich-Leo
(86) Internationale Anmeldenummer: PCT/EP2004/010670
(87) Internationale Veröffentlichungsnummer: WO 2005/061169

(56) Entgegenhaltungen:
- EP-B- 0 299 358
- DE-A- 19 852 462
- DE-C- 4 022 062
- DE-U- 9 314 720
- US-A- 3 109 914
- PATENT ABSTRACTS OF JAPAN Bd. 2000, Nr. 04, 31. August 2000 (2000-08-31) & JP 2000 000612 A (NIPPON STEEL CORP), 7. Januar 2000 (2000-01-07)

## Beschreibung

Die Erfindung bezieht sich auf ein Verfahren zum Stumpfschweißen von Blechen unterschiedlicher Dicke gemäß Oberbegriff des Anspruches 1 und auf eine Vorrichtung zur Durchführung des Verfahrens gemäß Oberbegriff des Patentanspruches 4 (siehe JP 2000/000612 A z.B.).

Aus der EP 299 358 B1 ist eine Vorrichtung zum kontinuierlichen Verschweißen von auf Stoß geführten Bändern bzw. Blechen mittels mindestens eines ortsfesten Laserstrahls mit auf beiden Seiten der zu verschweißenden Bänder bzw. Bleche paarweise senkrecht zu deren Laufrichtung angeordneten Spannrollen bekannt. Die oberen Spannrollen sind dabei an unabhängig bewegbaren Schwingen höhenbeweglich gelagert, um in geeigneter Weise auf den Blechen abzurollen. Dadurch können insbesondere beim Stumpfschweißen unterschiedlich dicker Bleche die oberen Spannrollen eine unterschiedliche Höhe einnehmen. Die beiden unterhalb der zu verschweißenden Bleche angeordneten Spannrollen sind fest angeordnet, also nicht in der Höhe verstellbar und bilden damit eine gleichmäßige ebene Auflage für die zu verschweißenden Bleche.

In der DE 93 14 720 U1 ist eine Vorrichtung zum Glätten von zuvor hergestellten Schweißnähten an relativ dünnen Blechen beschrieben, wobei oberhalb der Bleche und zwar im unmittelbaren Bereich der Schweißnaht je eine Stützrolle und unterhalb der Bleche eine zustellbare und arretierbare Glättrolle vorhanden ist, um nach dem Schweißen eine eventuell vorhandene Schweißnahtwulst an der Unterseite der Bleche nach dem Schweißen zu beseitigen oder zumindest zu glätten.

Schließlich ist in der EP 713 746 B1 eine Vorrichtung und ein Verfahren zum Stumpfschweißen von flachen Blechen verschiedener Dicke mittels eines Laserstrahles beschrieben, wobei der Dickensprung zwischen den beiden Blechen an der Unterseite angeordnet ist und vor dem Schweißvorgang die Bleche im Bereich des Dickensprung eine plastische Verformung erhalten. Hierfür sind die oberen Blechhalteplatten und eine untere Tragstruktur entsprechend geformt.

In der JP 2000 000 612 A ist ein Verfahren zum kontinuierlichen Laserschweißen von Blechbändern beschrieben, wobei Bleche unterschiedlicher Dicke kontinuierlich stumpf aneinander geschweißt werden. Die Bleche werden dabei auf festen unteren Rollen durch die Schweißanlage transportiert und dabei mit oberen Anpressrollen genau fixiert. Zum Einstellen auf unterschiedliche Blechdicken sind dabei diese oberen Rollen höhenverstellbar.

In der DE 40 22 062 C1 ist eine Vorrichtung zum geregelten Führen von Bändern und Stumpfschweißen entlang ihrer Längskanten beschrieben, wobei jedes Blechband nur auf einer Seite mit Hilfe von auch höhenverstellbaren Umlenkrollen geführt ist.

In dem Stand der Technik ist zwar beschrieben, dass der Dickensprung zwischen den Blechen entweder oberhalb oder unterhalb der Bleche angeordnet ist, ein Wechsel der Anordnung von dickerem und dünnerem Blech insbesondere ein Wechsel des Dickensprunges von oben nach unten und umgekehrt ist aber bei diesen Schweißvorrichtungen nicht vorgesehen.

Der Erfindung liegt daher die Aufgabe zugrunde, ein gattungsgemäßes Verfahren und eine Vorrichtung zur Durchführung dieses Verfahrens vorzuschlagen, bei dem die Anordnung von dickem und dünnem Blech und insbesondere die Anordung des Dickensprunges mit ein und derselben Vorrichtung beliebig veränderbar ist.

Zur Lösung dieser Aufgabe sind die unabängigen Ansprüche 1 und 4 vorgesehen. In den Ansprüchen 2 und 3 sind ergänzende Verfahrensvorschläge enthalten.

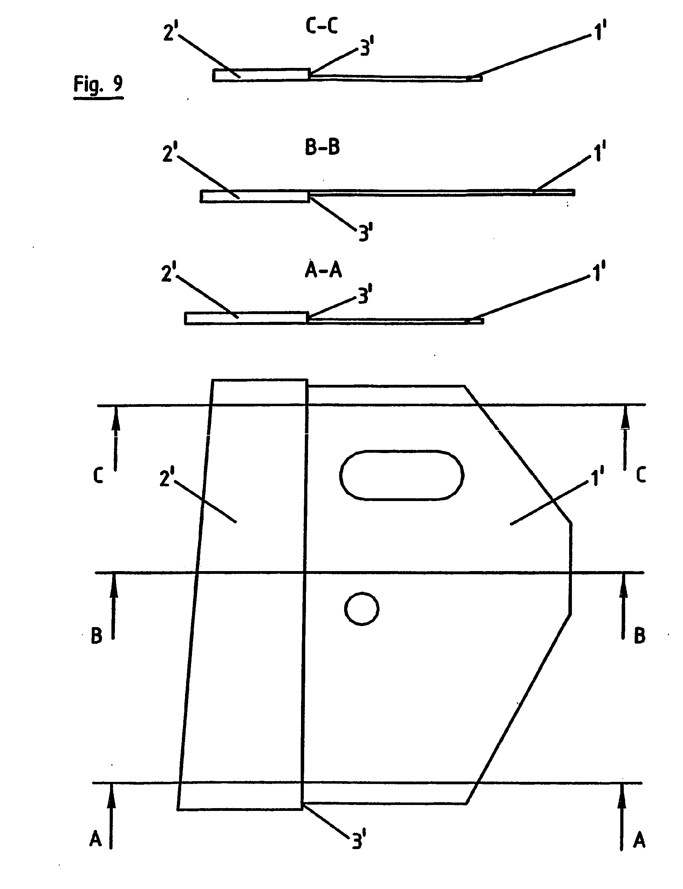

Bei dem erfindungsgemäßem Verfahren bzw. der Vorrichtung zur Durchführung dieses Verfahrens ist vorgesehen, dass neben den auf der Oberseite der Bleche höhenbeweglich und/oder federnd abrollenden Blechen auch unterhalb der Bleche mindestens auf einer Seite der Schweißnaht die Spannrollen in der Höhe verstellt werden können. Vorzugsweise ist nur eine der beiden unterhalb der Bleche angeordneten Spannrollen in der Höhe verstellbar, während die andere Rolle fest auf der Unterlage angeordnet ist. Unter "in der Höhe verstellbar" ist dabei zu verstehen, dass keine federnde Lagerung dieser Spannrolle vorgesehen ist, sondern dass sie vorzugsweise in Abängigkeit von der vorgegebenen Dicke und/oder vorgegebenen erforderlichen Höhenlage des Bleches verstellt wird. Es hat sich dabei insbesondere auch als günstig erwiesen, während des laufenden Schweißvorganges die Höhe einer unteren Spannrolle zu verändern bzw. zu verstellen, so dass die Relativlage der beiden aneinander stoßenden Blechkanten über den Verlauf der Schweißnaht z.B. sinusförmig oder nach einem bestimmten vorgegebenen Kurvenverlauf verändert werden kann. Damit kann ein sogenannter Dickensprung ganz oder teilweise innerhalb eines Bauteils z.B. von der Unterseite der Bleche zur Oberseite der Bleche und wieder zurück erreicht werden (vgl. Fig. 9).

Für die Verstellung können die unteren Spannrollen vorzugsweise an einem auf vertikalen Führungsschienen höhenverstellbaren Lager mit einem einfachen Antrieb zur Höhenverstellung angeordnet sein.

Mit dem erfindungsgemäßen Verfahren ist im Gegensatz zum Stand der Technik ein beliebiger Wechsel des Dickensprunges im Bereich der Schweißnaht zwischen ober- und unterhalb der Bleche möglich. Außerdem kann auch wie aus den beigefügten Figuren ersichtlich ist ein beliebiger Wechsel des dickeren Bleches von links nach rechts vorgenommen werden. Das ist insbesondere dann von Vorteil, wenn Bauteile erzeugt werden müssen, die für die linke und rechte Seite eines PKW's benötigt werden und die spiegelbildlich ausgebildet sein müssen. Eine Herstellung derartiger spiegelbildlicher Bauteile war mit den zum Stand der Technik gehörigen Schweißvorrichtungen nicht vorgesehen und nicht möglich bzw. nur nach aufwendigem Drehen und Neupositionieren der zugehörigen Bleche des Bauteiles möglich. Erfindungsgemäß ist eine derartige Drehung und Neupositionierung nicht erforderlich. Wie sich aus der Figurenbeschreibung ergibt, können durch einfache Höhenverstellung von einer unteren Spannrolle sowohl spiegelbildliche Bauteile (vgl. Fig. 7 u. 8) als auch Bauteile mit wechselndem Dickensprung im Verlauf einer Schweißnaht hergestellt werden.

Die Erfindung wird anhand der beigefügten Fig. 1 bis 9 beispielsweise näher erläutert. Es zeigen
- Fig. 1: die beim Schweißen unterhalb und oberhalb der Bleche 1, 2 angeordneten Spannrollen 4, 5, 10 in der Seitenansicht
- Fig. 2 bis 6: verschiedene Stirnansichten der Spannrollen 4, 5 und 10 mit unterschiedlichen Positionen des Dickensprungs 3 und der höhenverstellbaren Spannrolle 4
- Fig. 7 bis 9: verschiedene aus den Blechen 1, 2 bzw. 1', 2' zusammengefügte Bauteile jeweils in der Draufsicht und im Schnitt.

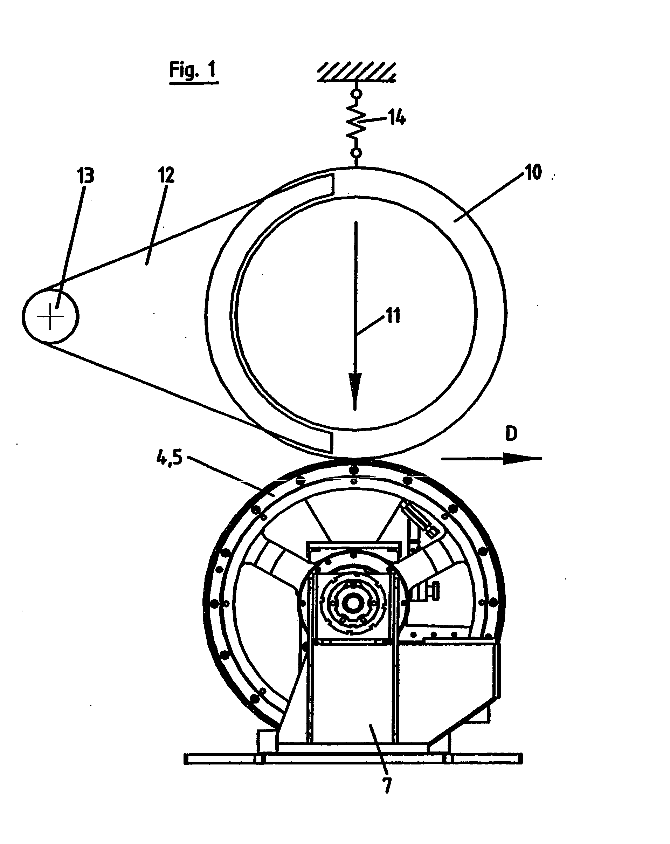

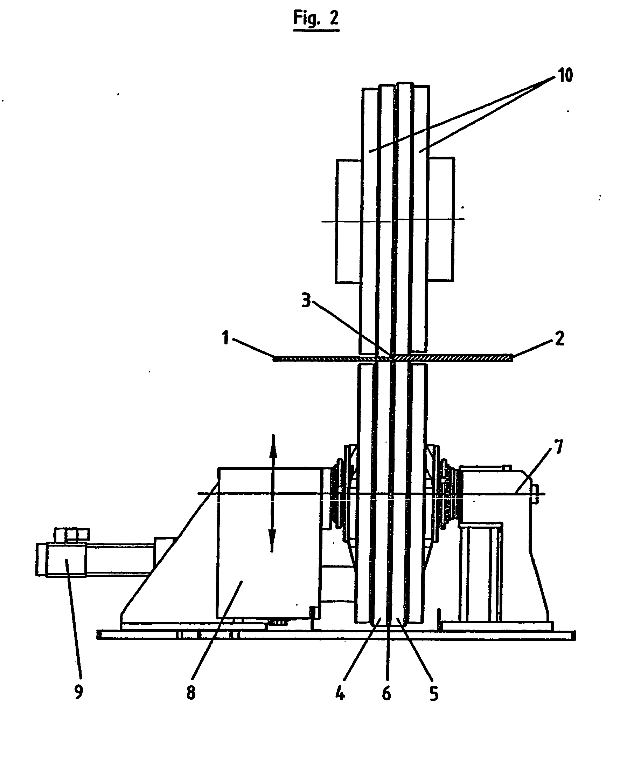

In Fig. 1 sind in der Seitenansicht von der gesamten Schweißvorrichtung lediglich die zugeordneten Spannrollen 4, 5 und 10 dargestellt, zwischen denen während des Schweißvorganges die Bleche in Durchlaufrichtung D geführt werden. Die obere Spannrolle 10 ist dabei in an sich bekannter Weise an einer Schwinge 12 befestigt, die im Wesentlichen an der Feder 14 aufgehängt und um die waagerechte Drehachse des Lagerbockes 13 höhenbeweglich ist. Innerhalb der oberen Spannrolle 10 wird der mit dem Pfeil 11 angeordnete Laserstrahl zwischen den beiden Spannrollen 10 (vgl. Fig. 2) auf die Berührungslinie der beiden Bleche 1, 2 gerichtet. Da die Bleche 1, 2 bzw. 1', 2' im Bereich der Laserschweißnaht vorzugsweise unterschiedlich dick sind, ergibt sich dort der mit 3, 3' bezeichnete Dickensprung. Dieser Dickensprung ist nach Fig. 2 für den Normalfall oben angeordnet, wobei die beiden Unterseiten der Bleche 1, 2 im Bereich der Schweißnaht eine ebene Fläche bilden. Für diesen Fall ist auch die höhenverstellbare Spannrolle 4 in ihrer sogenannten Null-Position auf derselben Höhe wie die gegenüberliegende an dem festen Lager 7 angeordnete Spannrolle 5. Die auf der rechten Seite der Schweißnaht angeordnete obere Spannrolle 10 liegt auf dem dickeren Blech 2 und die linke Spannrolle 10 auf dem dünneren Blech 1 auf. In gleicher Weise könnte bei der Darstellung nach der Fig. 2 auch das dickere Blech 2 links und das dünnere Blech 1 rechts von der Schweißnaht angeordnet sein. In beiden Fällen ist aber der Dickensprung 3 zwischen diesen beiden Blechen obenliegend.

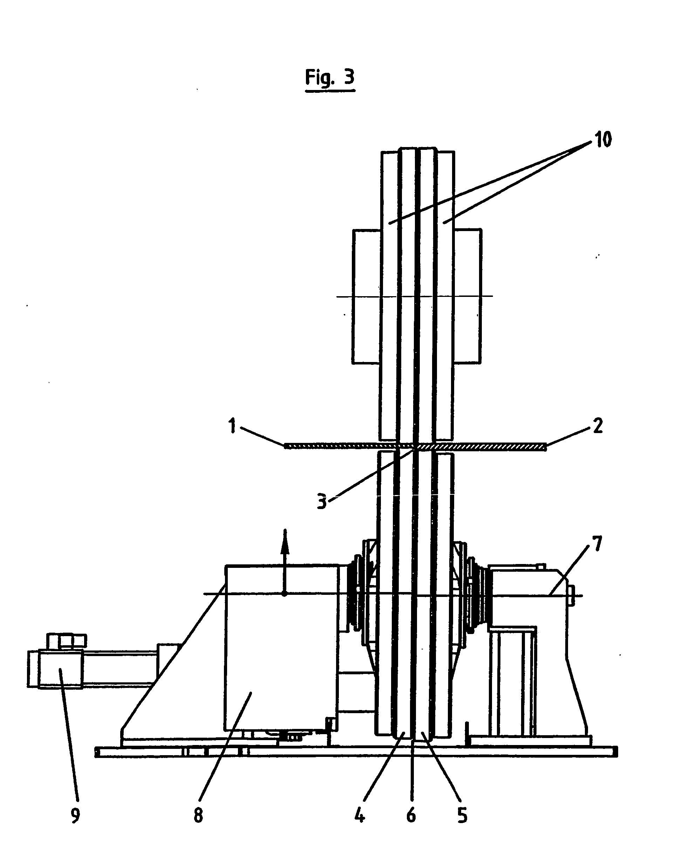

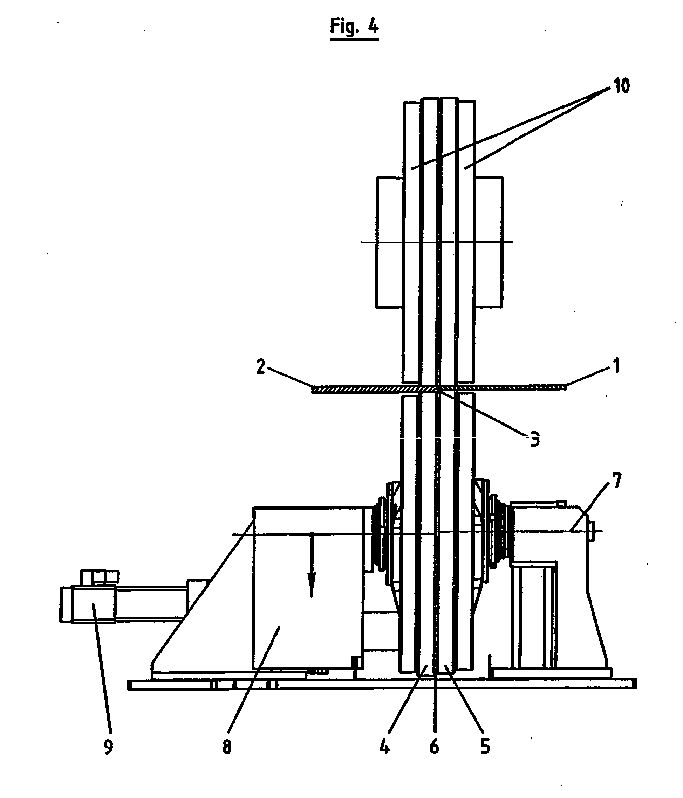

Bei den Fig. 3 und 4 liegt der Dickensprung jeweils unten, so daß die Oberseite der beiden Bleche eine waagerechte Ebene bildet, auf denen die beiden Spannrollen 10 auf der selben Höhe abrollen. Bei der Darstellung nach der Fig. 3 ist das dünnere Blech 1 links angeordnet und die darunter befindliche Spannrolle 4 ist gegenüber der Null-Position nach Fig. 2 mit Hilfe des höhenverstellbaren Lagers 8 und des zugehörigen Antriebes 9 um die entsprechende Dickendifferenz der beiden Bleche 1, 2 nach oben verstellt. Bei der Darstellung nach der Fig. 4 mit der Anordnung des dickeren Bleches 2 links ist die Spannrolle 4 um die Dickendifferenz aus der Null-Position nach unten verstellt. In allen Fällen bleibt die Höhenlage der Spannrolle 5 unverändert. Die oberen Spannrollen 10 nehmen automatisch die Höhenposition ein, die durch das jeweils rechts auf der Spannrolle 5 liegende Blech bestimmt wird. Verstellt werden muß also jeweils nur die Höhensposition der linken Spannrolle 4.

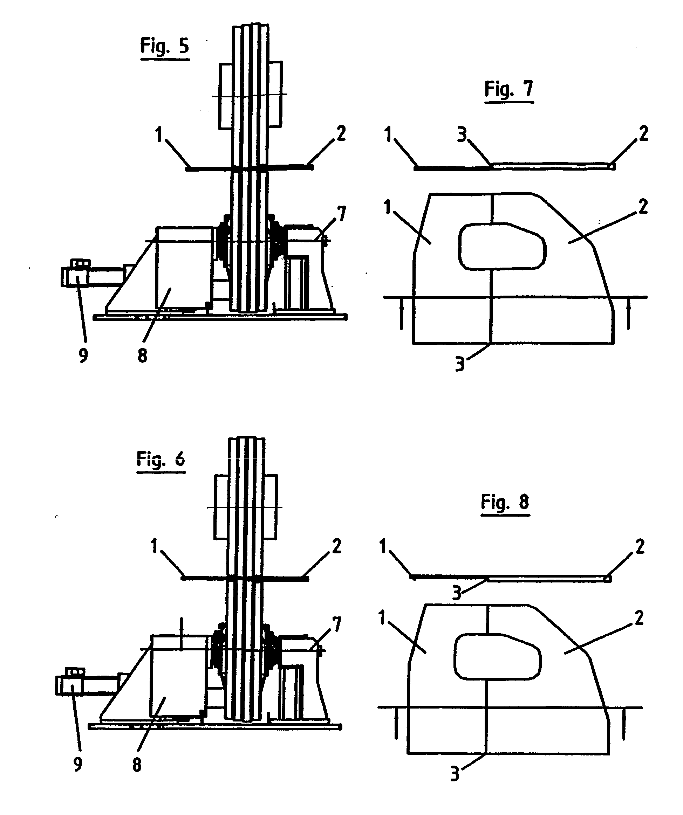

In den Fig. 7 u. 8 sind jeweils in der Draufsicht und im Schnitt zwei spiegelbildliche Bauteile dargestellt, wobei in Fig. 7 der Dickensprung 3 oben und in Fig. 8 der Dickensprung 3 unten angeordnet ist und in beiden Fällen das dünne Blech 1 links und das dicke Blech 2 rechts sich befindet. Die daneben dargestellten Fig. 5 u. 6 zeigen nochmals verkleinert und etwas schematischer die Fig. 2 u. 3.

In Fig. 9 ist im unteren Bereich in der Draufsicht ein anderes aus den Blechen 1' u. 2' zusammengefügtes Bauteil dargestellt. Die Besonderheit gemäß der Erfindung hierbei ist, daß der Dickensprung 3' innerhalb dieses Bauteiles entlang der Schweißnaht nur durch die Höhenverstellung der Spannrolle 4 während des Schweißvorganges kontinuierlich verändert wird. Im Bereich der Schnittlinien A-A und C-C ist der Dickensprung 3' jeweils oben angeordnet, während er im Bereich der Schnittlinie B-B unten angeordnet ist. Von den beiden Enden der Schweißnaht ausgehend verändert sich also, vorzugsweise kontinuierlich die Lage des Dickensprunges 3', so daß entweder das rechte Blech 1' oder das linke Blech 2' im Bereich der Schweißnaht bogenförmig ausgebildet ist. Am einfachsten ist es hierbei natürlich, wenn das dickere Blech 2' auf der festen Spannrolle 5 und das dünne Bleche 1' auf der höhenverstellbaren Spannrolle 4 verläuft und dabei nur das dünnere Blech bodenförmig verformt wird.

### Bezugszeichenliste

- 1, 1': Blech (dünn)
- 2, 2': Blech (dick)
- 3, 3': Dickensprung zwischen 1 und 2 bzw. 1' und 2' (unten oder oben)
- 4: Spannrolle
- 5: Spannrolle
- 6: Spalt zwischen 4 und 5
- 7: Lager für 5 (fest)
- 8: Lager für 4 (höhenverstellbar)
- 9: Antrieb für Höhenverstellung
- 10: Spannrollen (oben)
- 11: Laserstrahl
- 12: Schwinge an 13
- 13: Lagerbock
- 14: Feder

- D: Durchlaufrichtung für 1, 2

## Patentansprüche

1. Verfahren zum Stumpfschweißen von Blechen (1, 2), vorzugsweise Blechbändern oder -platinen verschiedener Dicke durch Relativbewegung zwischen einem Laserstrahl (11) oder Elektronenstrahl und den Blechen (1, 2) entlang der Berührungslinie der Bleche (1, 2) bzw. der herzustellenden Schweißnaht mit ober- und unterhalb der Bleche (1, 2) paarweise mit Abstand zueinander neben der Schweißnaht angeordneten Spannrollen (4, 5, 10), wobei die oberhalb der Bleche (1, 2) angeordneten Spannrollen (10) höhenbeweglich und/oder federnd auf den Blechen (1, 2) abrollen, **dadurch gekennzeichnet, dass** mindestens auf einer Seite der Schweißnaht die unterhalb der Bleche (1, 2) angeordneten Spannrollen (4, 5) in der Höhe verstellt werden und während des laufenden Schweißvorganges die Höhe einer unterhalb der Bleche (1,2) angeordneten Spannrolle (4) verändert wird.

2. Verfahren nach Anspruch 1, **dadurch gekennzeichnet, dass** die Spannrollen (4, 5) in Abhängigkeit von der Dicke und/oder der erforderlichen Höhenlage des zugehörigen Bleches (1, 2) in der Höhe verstellt werden.

3. Verfahren nach Anspruch 1 oder 2, **dadurch gekennzeichnet, dass** während des laufenden Schweißvorganges die Höhe der anderen Spannrolle (5) festgehalten wird.

4. Vorrichtung zum Stumpfschweißen von Blechen (1, 2), vorzugsweise Blechbändern oder -platinen verschiedener Dicke, zur Durchführung des Schweißverfahrens nach einem der vorhergehenden Ansprüche, wobei ober- und unterhalb der Bleche (1, 2) paarweise mit Abstand zueinander neben der Schweißnaht Spannrollen (4, 5, 10) angeordnet sind und die oberhalb der Bleche (1, 2) angeordneten Spannrollen (10) höhenbeweglich und/oder federnd auf den Blechen (1, 2) abrollen, **dadurch gekennzeichnet, dass** mindestens eine der unterhalb der Bleche (1, 2) angeordneten Spannrollen (4) an einem auf einer vertikalen Führungsschiene höhenverstellbaren Lager (8) angeordnet ist.

## Claims

1. Method for butt welding said metal sheets (1, 2), preferably strips of metal sheet or steel sheet billets of differing thickness by relative motion between a said laser beam (11) or electron beam and the said metal sheets (1, 2) along the contact line between the said metal sheets (1, 2) and/or the weld seam to be prepared with said tension rollers (4, 5, 10) arranged in pairs above and below the said metal sheets (1, 2) at spaced location from one another and next to the said weld seam, wherein the said tension rollers (10) arranged above the said metal sheets (1, 2) are movable in height and/or roll on the said metal sheets (1, 2) in a spring-loaded manner, **characterized in that** the said tension rollers (4, 5) arranged below the said metal sheets (1, 2) are adjusted in height at least on one side of the said weld seam and **in that** the height of one tension roller (4) arranged under said metal sheets (1, 2) is changed during ongoing welding operation.

2. Method in accordance with claim 1, **characterized in that** the said tension rollers (4, 5) are adjusted in height as a function of the thickness and/or the necessary height position of the said corresponding metal sheet (1, 2).

3. Method in accordance with claim 1 or 2, **characterized in that** the height of the said other tension roller (5) is fixed during the ongoing welding operation.

4. Device for butt welding said metal sheets (1, 2), preferably metal sheet strips or steel sheet billets of differing thickness for carrying-out the welding method in accordance with any one of the above claims, wherein said tension rollers (4, 5, 10) are arranged in pairs at spaced locations from one another next to the said weld seam above and below the said metal sheets (1, 2), and the said tension rollers (10) arranged above the said metal sheets (1, 2) are movable in height and/or roll on the said metal sheets (1, 2) in a spring-loaded manner, **characterized in that** at least one of the said tension rollers (4) arranged below the said metal sheets (1, 2) is arranged on a said bearing (8) that is adjustable in height on a said vertical guide rail.

## Revendications

1. Procédé pour souder bout à bout des tôles (1, 2), de préférence des rubans ou des platines de tôle de différentes épaisseurs, par mouvement relatif entre un faisceau laser (11) ou un faisceau d'électrodes et les tôles (1, 2) le long d'une ligne de contact des tôles (1, 2) ou de la soudure à réaliser avec des rouleaux de tension (4, 5 et 10) montés par couple auprès de la soudure, au-dessus ou au-dessous des tôles (1, 2) à une certaine distance les uns des autres, les rouleaux de tension (10) montés au-dessus des tôles (1, 2) étant réglables en hauteur et/ou se déployant sur les tôles (1, 2) par effet de ressort, **caractérisé par le fait qu'**au moins les rouleaux de tensions (4, 5) montés au-dessous des tôles (1, 2) peuvent être réglés en hauteur au moins sur un côté de la soudure et que la hauteur d'un rouleau de tension (4) monté au-dessous des tôles (1, 2) est modifiée pendant l'opération de soudage courante.

2. Procédé selon la revendication 1, **caractérisé par le fait que** les rouleaux de tension (4, 5) sont réglés en fonction de l'épaisseur et/ou de la hauteur nécessaire de la tôle (1, 2) correspondante.

3. Procédé selon la revendication 1 ou 2, **caractérisé par le fait que** la hauteur de l'autre rouleau de tension (5) est maintenue pendant l'opération de soudage courante.

4. Dispositif pour souder bout à bout des tôles (1, 2), de préférence des rubans ou des platines de tôle de différentes épaisseurs, pour mettre en oeuvre le procédé de soudage selon une des revendications précédentes, des rouleaux de tension (4, 5 et 10) étant montés par couple auprès de la soudure, au-dessus ou au-dessous des tôles (1, 2) à une certaine distance les uns des autres et les rouleaux de tension (10) montés au-dessus des tôles (1, 2) étant réglables en hauteur et/ou se déployant sur les tôles (1, 2) par effet de ressort, **caractérisé par le fait qu'**au moins un des rouleaux de tension (4) montés au-dessous des tôles (1, 2) est suspendu à un palier (8) réglable en hauteur sur un rail de guidage vertical.
